# EUROPEAN PATENT APPLICATION

(11) **EP 4 527 801 A2**
(43) Date of publication of application: **26.03.2025**
(21) Application number: 25156303.7
(22) Date of filing: 25.08.2022
(51) Int. Cl.: C01F 11/00

(54) **METHODS FOR FORMING SILICATES OF CALCIUM**

(30) Priority: 25.08.2021 US 202163236892 P; 07.03.2022 US 202263317447 P; 24.08.2022 US 202217894246
(62) Divisional of application: 22777396.7
(71) Applicant: NOVAPHOS GYPSUM TECHNOLOGY LLC, Fort Meade, Florida 33841 (US)
(72) Inventor: BLAKE, David. B, 33841 West Fort Meade (US); VIGNOVIC, Mark, 33841 West Fort Meade (US)
(74) Representative: HGF

(57) **Abstract**

A method includes forming a reaction bed containing feed agglomerates in a reaction chamber by heating the feed agglomerates. Individual feed agglomerates initially contain particles of a gypsum source and of a silicon source approximately homogeneously distributed throughout the individual agglomerates. The gypsum and silicon in the feed agglomerates react during the heating in the reaction chamber and, thereby, form processed agglomerates that contain silicates of calcium and an increased amount of amorphous silicon compared to the feed agglomerates before the heating. The method includes generating off gas from the reaction bed, the off gas containing oxides of sulfur, and removing the processed agglomerates from the reaction chamber.

## Description

### CROSS REFERENCE TO RELATED APPLICATIONS

This application claims priority under 35 U.S.C. § 119 to U.S. Provisional Pat. App. No. 63/317,447, filed on March 7, 2022 and entitled "Methods, Compositions, and Systems for Forming Silicates of Calcium", and to U.S. Provisional Pat. App. No. 63/236,892, filed on August 25, 2021 and entitled "Methods, Compositions, and Systems for Forming Silicates of Calcium", each of which is incorporated herein by reference.

### BACKGROUND

Phosphogypsum (PG) is one of the potential gypsum raw materials that may be used in the processes described herein. However, phosphogypsum is a waste material with disposal issues and characteristics to be addressed if it is to be used. Phosphogypsum is the primary waste byproduct of the wet-acid process for producing phosphoric acid from phosphate rock. Nearly 50 tons of phosphogypsum are generated in Florida every minute, adding to the more than 1 billion tons of phosphogypsum already placed in large stacks, each covering hundreds of acres, some more than 300 feet tall. Worldwide, 170 million tons of phosphogypsum are disposed annually and the recycling rate is still very low, i.e., less than 5%. It is estimated that the total amount of PG stored will reach 7 to 8 billion tons by 2025. At the same time, recent evolutions in the phosphate industry, together with rapidly developing economies, are leading to a major increase in the production of phosphogypsum, requiring a large disposal area with an elaborate management strategy to avoid soil, water, and air pollution.

Due to its chemical properties, phosphate rock may contain significant quantities of naturally occurring radioactive materials (NORM). Small amounts of phosphate ore, and hence NORM, are also present in phosphatic sands and clays, which may be used in the methods herein. Before phosphate rock is turned into fertilizer or other products, it is transformed into phosphoric acid through a wet process using sulfuric acid to dissolve the phosphate rock, creating a solid/liquid mixture (slurry) of phosphoric acid and calcium sulfate (phosphogypsum). The desired phosphoric acid component is separated from the mixture by filtration, leaving phosphogypsum as the waste product. This processing concentrates NORM in the waste products, transforming the phosphogypsum into a Technologically Enhanced Naturally Occurring Radioactive Material (TENORM). More than 5 tons of phosphogypsum are generated for each ton of phosphoric acid produced. Accordingly, reducing the accumulation of phosphogypsum or addressing the radiological concerns of phosphogypsum or both may be beneficial.

### BRIEF DESCRIPTION OF THE DRAWINGS

1. Some embodiments are described below with reference to the following accompanying drawings.

Fig. 1 is a flow diagram of a calcium silicate production method and system.
Fig. 2 is a phase diagram for CaO-SiO₂.
Fig. 3 is bar graph of radon-222 emanation rate from compared materials.
Fig. 4 is a graph of plant-available silicon content versus silica ratio.
Fig. 5 is a graph of set time test results (penetration distance versus time) for concrete.
Fig. 6 is a graph of compressive strength versus time for concrete.
Fig. 7 is a graph of surface resistivity, a measure of permeability, versus time for concrete.
Fig. 8 is a bar graph of sulfur decomposition versus time.
Fig. 9 is a flow diagram of a calcium silicate production method and system.

### DETAILED DESCRIPTION

The methods, compositions, and systems herein include several areas of discovery regarding the use of rotary kilns, rotary hearth furnaces, grate kilns, and similar equipment processing gypsum (CaSO₄, a calcium source) and silica to produce plant-available silicon (PAS) fertilizer and/or supplementary cementitious material (SCM) and, potentially, to capture available sulfur. The methods, compositions, and systems described herein do not utilize carbon as a CaSO₄ reductant and avoid the use of a melt furnace, such as in US Pat. No. 4,312,842 to Yin, to produce the solids, as described in previous patents referenced herein. Instead, silica or silica-containing waste materials (e.g., tailing sands, etc.) are used in prescribed amounts to decrease melting and to facilitate achieving desirable product characteristics and optimizing material recoveries. In addition, alternative sources of gypsum (e.g., gypsum waste piles from SO₂ lime scrubber systems) can be utilized. Methods herein also allow for the use of phosphogypsum wastes generated by the wet phosphoric acid process (e.g., waste piles and phosphogypsum filter cake) through radon encapsulation to reduce radon emanation. Methods, raw materials, and systems described individually herein may be used in one or more combinations thereof.

U.S. Patent Nos. 7,378,070, 7,910,080, 8,734,749, and 9,783,419 and U.S. Patent Application Nos. 16/358,504 (filed March 19, 2019) and 16/914,182 (filed June 26, 2020) are incorporated herein by reference as containing background descriptions of methods and systems supportive of the methods and systems described herein.

Phosphogypsum contains appreciable quantities of uranium and its decay products, such as radium-226 and radon-222, due to their presence in phosphate ores. Uranium in phosphate ores found in the U.S. ranges in concentration from 0.26 - 3.7 becquerels/gram (Bq/g) (7 - 100 picocuries/g (pCi/g)). (Source: U.S. Environmental Protection Agency (USEPA).)

During the wet process, radionuclides present in the phosphate ore are selectively separated and concentrated. Around 80 percent of the radium-226 becomes concentrated in the phosphogypsum. Radium concentrations in phosphogypsum range from 0.4 - 1.3 Bq/g (11 - 35 pCi/g). (Source: USEPA)

Radium's decay product, radon-222, can be found emanating from phosphogypsum. Average radon fluxes range from 0.06 - 0.44 Bq/m² (1.7 - 12 pCi/m²) per second and can be as high as 12.6 Bq/m² (340 pCi/m²) per second, with a mean value of 0.25 Bq/m² (6.8 pCi/m²) per second. (Source: USEPA)

Efficient purification techniques for the removal of radium from phosphate ore and phosphogypsum are lacking. The radium that is present in the phosphate rock is still present in the phosphogypsum.

Because of concerns over elevated radionuclide concentrations in phosphogypsum, the USEPA requires that phosphogypsum be managed in engineered stacks, which are designed to limit public exposure from emissions of radon and other radionuclides. Owners and operators must monitor and report radon emissions from inactive stacks and take measures to keep radon emissions within the regulatory limit of 20 picocuries per square meter per second.

Fortunately, the methods and systems herein convert gypsum to useful products. In addition, if the gypsum is phosphogypsum or otherwise exhibits a harmful radon emanation rate, then the conversion process may decrease the radon emanation rate. Gypsum may be converted in the following reaction:

CaSO₄ + SiO₂ + heat --> SOs (g) + CaSiO₃ (s) (Reaction 1)

to produce sulfur trioxide and a silicate of calcium. In this example, the reaction yields monocalcium silicate. Other potential reaction products include dicalcium silicate (Ca₂SiO₄) and tricalcium silicate (CasSiOs or Ca₃Si₂O₇). Any one or more of these four silicates of calcium may result from the conversion of gypsum and all are encompassed herein by the term "calcium silicate," unless otherwise noted.

Gypsum conversion may be compared and contrasted with the chemical reduction of apatite in the following reaction:

Ca₁₀(PO₄)₆F₂ + 9SiO₂ + 15C + heat --> 3P₂ + 9CaSiO₃ + 15CO +CaF₂ (Reaction 2)

to produce phosphorus and a silicate of calcium. In both reactions, the reactants include calcium and silica heated to similar temperatures and the products include silicates of calcium. However, in Reaction 1, sulfur in the calcium sulfate is liberated as an oxide, while in Reaction 2, phosphorus in the calcium fluorophosphate is chemically reduced to elemental phosphorus. Also, Reaction 2 requires carbon as a reductant (carbon is oxidized), while Reaction 1 does not require carbon or another reductant.

Silicon fertilizer is one useful product that may result from the methods and systems herein. Silicon fertilizers help plants resist diseases and insect attack, help plants resist unfavorable climatic conditions, enhance soil physical & chemical properties, and maintain nutrients in plants. Silicon-based fertilizers reduce soil pH and increase adsorption of minerals from the soil and help the plant overcome deficiency that mainly arises due to lack of proper nutrients in the soil. In addition, these products enhance the structural properties of a plant by increasing elasticity and rigidity, and thus, protects plants against climate and infection.

While most of the earth's silicon is in the crystalline form of SiO₂ (e.g., quartz), silicon in this state is inert and not readily soluble for uptake by plants. Biogenic silicon, also known as bioactive silicon, is usually in the form of amorphous silicates, such as calcium silicate. Laboratory testing for biogenic silicon is reported as "plant-available silicon" (PAS). A suitable test method used for obtaining the PAS data herein appears in Dennis Sebastian, et al., A 5-Day Method for Determination of Soluble Silicon Concentrations in Nonliquid Fertilizer Materials Using a Sodium Carbonate-Ammonium Nitrate Extractant Followed by Visible Spectroscopy with Heteropoly Blue Analysis: Single-Laboratory Validation, J. of AOAC Intl., vol. 96, iss. 2, 1 March 2013, pp. 251-259, https://doi.org/10.5740/jaoacint.12-243. A correlation exists between the amount of PAS measured in the soil and the amount of biogenic silicon that is in the plant.

Silicon fertilizers are currently produced from steel slag that is a byproduct from the melting of pig iron and/or steel scrap in the manufacture of molten steel. The steel slags contain silicon along with various heavy metals that may be released to the environment when used as silicon fertilizer. In sufficient concentrations, several heavy metals are potentially toxic environmental pollutants, such as, chromium, arsenic, cadmium, mercury, lead, manganese, cobalt, nickel, copper, zinc, selenium, silver, tin, antimony, thallium, etc. Preliminary analysis of the chemical composition of the silicon products produced by the methods and systems herein shows that it exceeds the specifications for PAS (2.3%) currently produced and marketed as silicon fertilizer from steel slag and contains fewer heavy metals (see Table 1).

**TABLE 1 - Toxicity Characteristic Leaching Procedure (TCLP, mg/L) Processed Agglomerates**

| | Whole | Crushed | Regulatory Limit |
|---|---|---|---|
| Arsenic | <0.03 | <0.03 | 5.0 |
| Barium | 0.47 | 0.41 | 100 |
| Cadmium | <0.02 | <0.02 | 1.0 |
| Chromium | <0.02 | <0.02 | 5.0 |
| Lead | <0.03 | <0.03 | 5.0 |
| Selenium | <0.08 | <0.08 | 1.0 |
| Silver | <0.03 | <0.03 | 5.0 |
| Mercury | <0.004 | <0.004 | 0.20 |

Supplementary cementitious material (SCM) is another useful product that may result from the methods and systems herein. Coal fly ash and blast furnace slag are widely used SCMs. It is estimated that more than 50% of the concrete in the US includes fly ash as an SCM. These materials often replace about 20-30% of cement, but up to 70 percent is added for mass concrete used in dams, roller-compacted concrete pavements, and parking areas. Replacing cement with these SCMs in concrete can enhance its strength, increase resistance to adverse chemical reactions, increased workability for better concrete placement, and delay setting time to allow more time for concrete placement and surface finish. Many departments of transportation (DOTs) in US states mandate the use of SCMs like fly ash in concrete for a wide range of applications, and it is used world-wide. However, coal fly ash is now in shortage owing to the closure of many coal-fired power plants in recent years. The supplementary cementitious material produced by the methods and systems described herein are comparable or better than cement or fly ash.

The discoveries described herein identify a number of solutions that may be implemented in systems and methods also described herein. Multiple solutions may be combined for implementation, enabling still further systems and methods. The inventors expressly contemplate that the various options described herein for individual systems and methods are not intended to be so limited except where incompatible with other systems and methods. The features and benefits of individual systems herein may also be used in combination with methods and other systems described herein even though not specifically indicated elsewhere. Similarly, the features and benefits of individual methods herein may also be used in combination with systems and other methods described herein even though not specifically indicated elsewhere.

Method A includes forming a reaction bed containing feed agglomerates in a reaction chamber by heating the feed agglomerates. Individual feed agglomerates initially contain particles of a gypsum source and of a silicon source approximately homogeneously distributed throughout the individual agglomerates. The gypsum and silicon in the feed agglomerates react during the heating in the reaction chamber and, thereby, form processed agglomerates that contain silicates of calcium and an increased amount of amorphous silicon compared to the feed agglomerates before the heating. Method A includes generating off gas from the reaction bed, the off gas containing oxides of sulfur, and removing the processed agglomerates from the reaction chamber.

As the term is used herein, a "reaction bed" refers to the portion of the bed of feed agglomerates where the chemical reaction is occurring. Also, as the term is used herein, "approximately homogeneously distributed" refers to a distribution of particles that is not necessarily completely homogeneous throughout an individual agglomerate, but is sufficiently homogeneous in distribution that a reaction rate of gypsum and silicon is not limited due to poorly distributed particles.

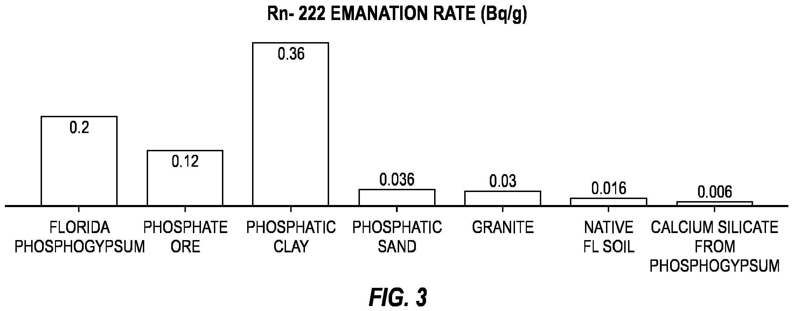

Additional features may be implemented in Method A. By way of example, the gypsum source may be phosphogypsum. The feed agglomerates may exhibit a radon-222 emanation rate due to the phosphogypsum and Method A may further include decreasing the radon-222 emanation rate in the processed agglomerates compared to the feed agglomerates before the heating. As one example, the radon-222 emanation rate of the processed agglomerates after cooling to ambient temperature is less than or equal to 0.013 Bq/g. Accordingly, the processed agglomerates may be safer for disposal than phosphogypsum. Analysis of radon emanation rates for other reference materials are discussed below and shown in Fig. 3.

The feed agglomerates may initially lack components sufficient to conduct carbothermal reduction during the heating of the feed agglomerates, in contrast to methods that involve carbothermal reduction of phosphate ore. It follows that the feed agglomerates may initially lack a substantial amount of phosphorus or carbon or both. As the term is used herein, "lacking a substantial amount" means that the amount of phosphorus or carbon or both that is present, if any, is not sufficient to conduct the carbothermal reduction of phosphorus. A substantial amount of phosphorus or carbon or both would be sufficient to conduct the carbothermal reduction. An insubstantial amount may be insufficient due to physical gaps between reactant particles.

Individual agglomerates may initially provide a silica ratio ranging from 0.2 to 0.8 defined as a formula weight ratio (also, mole ratio) of silicon dioxide to calcium oxide plus silicon dioxide. Accordingly, "silica ratio" = (weight% SiO₂/60)/[(weight% CaO/56) + (weight% SiO₂/60)]. The weight% (wt%) of a calcium source other than calcium oxide is converted to a CaO basis before calculating silica ratio. The wt% of a silicon source other than silicon dioxide is likewise converted to an SiOz basis. The silica ratio may range from 0.5 to 0.8, such as from 0.64 to 0.80. The feed agglomerates may include 30-50 wt% gypsum and 40-60 wt% sand. The presence of excess SiOz may allow producing a product that is suitable as both a PAS fertilizer and an SCM.

Method A may further include maintaining a temperature in the reaction chamber from 1200 to 1400 °C along at least a portion of the reaction bed. The feed agglomerates may be maintained at the temperature for a time of 20 minutes or more, including 20-30 minutes or 30-60 minutes. For example, the temperature may be maintained from 1250 to 1300 °C for a time of 30 minutes or more, such as 30-60 minutes.

Method A may further include selecting a combination of the silica ratio and the temperature such that agglomerate melting in the reaction chamber decreases compared to higher temperatures or lower silica ratios or both. A selected combination may avoid agglomerate melting in the reaction chamber.

The feed agglomerates may initially lack a catalytic additive that would increase the reactivity of the gypsum with the silicon. As the term is used herein, a "catalytic additive" is an additive that does not occur naturally in the gypsum source nor in the silicon source and exhibits catalytic properties for the reaction of gypsum with silicon. The feed agglomerates may additionally lack a substantial amount of a material that functions as a naturally-occurring catalyst. As the term is used herein, "lacking a substantial amount" means that the amount of naturally-occurring catalyst that is present, if any, is not sufficient to increase the reactivity of the gypsum with the silicon. A substantial amount of naturally-occurring catalyst would be sufficient to increase the reactivity of the gypsum with the silicon.

Use of a catalyst potentially alters the beneficial characteristics of and products from the methods and systems herein. Depending upon the quantity and quality (i.e., chemical composition) of the catalyst, the amount and amorphous form of silicon present in the processed agglomerates might be less or altered, rendering the agglomerate unsuitable as an SCM or PAS, as well as decreasing the level of radon encapsulation. Analysis of the processed agglomerates without any added catalysts indicates that the processed material safely encapsulates radon and is useful as an SCM or PAS.

Other thermal gypsum decomposition processes were proposed as far back as 1916 and used a source of carbon (e.g., coke, coal, lignite, fuel oil, etc.) to reduce the calcium sulfate in a rotary kiln (Müller-Kühne and OSW-Krupp), circulating fluidized bed (ISU and Lurgi), or circular grate sintering machine (proposed by DMC/FIPR) for sulfur decomposition. Additives, including pyrite, SiO₂, Al₂O₃, and/or Fe₂O₃, were mixed with the feed to reduce operating temperatures or added to the discharged clinkered solids before downstream processing. The SCM and PAS characteristics of the clinkered solids and the radon encapsulating capabilities of these processes are not known since they were developed before SCM and PAS products were first marketed and before radium and radon levels of phosphogypsum were first subject to regulation. However, it is expected that the reduced operating temperature may have similar effects as described for catalyst usage, potentially changing the amount and amorphous form of silicon present in the processed agglomerates or decreasing the level of radon encapsulation.

The silicon source may be silica, which may be comprised by a variety of feed materials, including the several feed materials described herein as examples. To decrease physical limitations on the gypsum-silicon reaction rate, at least 80% of the particles of the gypsum source and of the silicon source may have a particle size less than 74 micrometers (µm) (200 mesh).

Conveniently, the heating of the feed agglomerates may occur in an oxidizing atmosphere. An oxidizing atmosphere is often maintained with less difficulty compared to a reducing atmosphere. The reaction chamber may be comprised by a rotary kiln, a rotary hearth furnace, a tunnel kiln, a straight grate known for iron ore pelletizing, or other heating device.

In the off gas generated from the reaction bed, the oxides of sulfur may include sulfur trioxide (SOs) or sulfur dioxide (SO₂) or both. Method A may further include recovering sulfur from the off gas. For example, sulfur may be recovered as sulfuric acid or ammonium sulfate.

In the processed agglomerates, the silicates of calcium may include dicalcium silicate or tricalcium silicate or both. The processed agglomerates may exhibit pozzolanic properties suitable for supplementary cementitious material at least when ground to a particle size distribution in which at least 80% of the particles have a particle size less than 74 µm (200 mesh). The processed agglomerates may exhibit a plant-available silicon content of 2.3 wt% or greater.

The described additional features of Method A may also be implemented in other systems and methods herein.

Method B includes forming a reaction bed containing feed agglomerates in a reaction chamber by heating the feed agglomerates and maintaining a temperature in the reaction chamber from 1200 to 1400 °C along at least a portion of the reaction bed for a time of 20 minutes or more. Individual feed agglomerates initially contain particles of a gypsum source and of a silicon source approximately homogeneously distributed throughout the individual agglomerates. Also, individual feed agglomerates initially provide a silica ratio ranging from 0.2 to 0.8 defined as a formula weight ratio of silicon dioxide to calcium oxide plus silicon dioxide. Further, individual feed agglomerates initially lack components sufficient to conduct carbothermal reduction during the heating of the feed agglomerates. Still further, individual feed agglomerates initially lack a catalytic additive that would increase the reactivity of the gypsum with the silicon. The gypsum and silicon in the feed agglomerates react during the heating in the reaction chamber and, thereby, form processed agglomerates that contain silicates of calcium and an increased amount of amorphous silicon compared to the feed agglomerates before the heating. Method B includes generating off gas from the reaction bed, the off gas containing oxides of sulfur, and removing the processed agglomerates from the reaction chamber.

Additional features may be implemented in System/Method B. By way of example, the gypsum source may be phosphogypsum and the silicon source may be silica. The temperature may be from 1250 to 1300 °C and the silica ratio may range from 0.5 to 0.8. Method B may further include selecting a combination of the silica ratio and the temperature that avoids agglomerate melting in the reaction chamber.

The processed agglomerates may exhibit pozzolanic properties suitable for supplementary cementitious material at least when ground to a particle size distribution in which at least 80% of the particles have a particle size less than 74 µm (200 mesh). The processed agglomerates may exhibit a plant-available silicon content of 2.3 wt% or greater.

The described additional features of Method B may also be implemented in other systems and methods herein.

Method C includes forming a reaction bed containing feed agglomerates in a reaction chamber by heating the feed agglomerates and maintaining a temperature in the reaction chamber from 1200 to 1400 °C along at least a portion of the reaction bed for a time of 20 minutes or more. Individual feed agglomerates initially contain particles of phosphogypsum and silica approximately homogeneously distributed throughout the individual agglomerates. Also, individual feed agglomerates initially provide a silica ratio ranging from 0.2 to 0.8 defined as a formula weight ratio of silicon dioxide to calcium oxide plus silicon dioxide. The feed agglomerates exhibit a radon-222 emanation rate due to the phosphogypsum. The phosphogypsum and silica in the feed agglomerates react during the heating in the reaction chamber and, thereby, form processed agglomerates that contain silicates of calcium and an increased amount of amorphous silicon compared to the feed agglomerates before the heating. The reaction decreases the radon-222 emanation rate in the processed agglomerates compared to the feed agglomerates before the heating. Method C includes generating off gas from the reaction bed, the off gas containing oxides of sulfur, and removing the processed agglomerates from the reaction chamber.

Additional features may be implemented in Method C. By way of example, the temperature may be from 1250 to 1300 °C and the silica ratio may range from 0.5 to 0.8. Method C may further include selecting a combination of the silica ratio and the temperature that avoids agglomerate melting in the reaction chamber.

The processed agglomerates may exhibit pozzolanic properties suitable for supplementary cementitious material at least when ground to a particle size distribution in which at least 80% of the particles have a particle size less than 74 µm (200 mesh). The processed agglomerates may exhibit a plant-available silicon content of 2.3 wt% or greater.

The described additional features of Method C may also be implemented in other systems and methods herein.

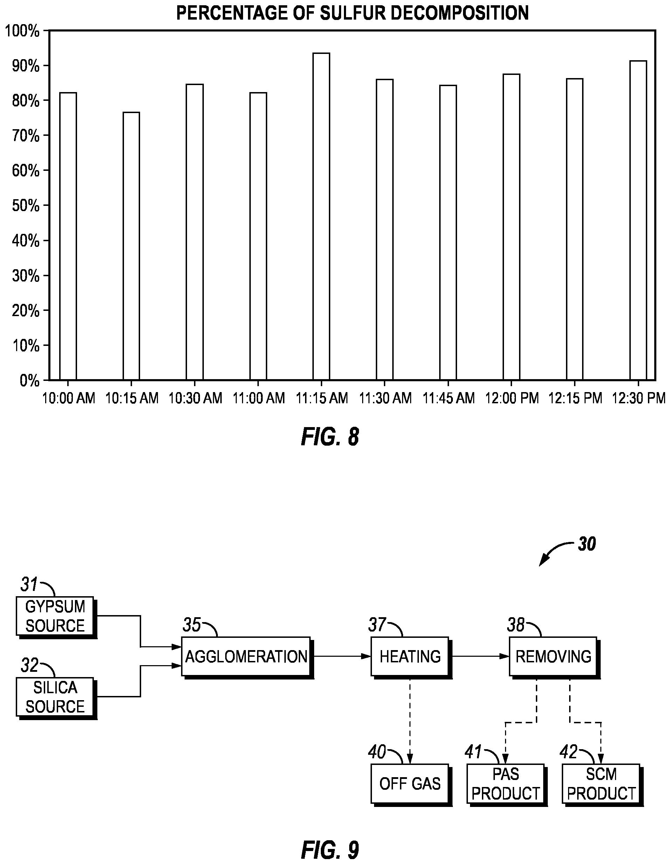

According to one method and system 30 shown in Fig. 9, a gypsum source 31 and silicon source 32, are combined in agglomeration 35 to yield feed agglomerates. The feed agglomerates undergo heating 37 in a reaction chamber and produce off gas. Off gas 40 from heating 37 may be collected and further processed into a salable or reusable form such as sulfuric acid or ammonium sulfate. The dashed line connecting heating 37 with off gas 40 indicates off gas collection is optional. Removing 38 takes the heat-processed agglomerates from the reaction chamber to become a PAS product 41, such as fertilizer or an SCM product 42 or both. The dashed lines connecting removing 38 with PAS product 41 and SCM product 42 indicates yielding the two products is optional.

In further detail, some of the methods and systems described herein include the use of a rotary hearth furnace, a rotary kiln, and/or a grate kiln, though other implementations are conceivable. The methods and systems may reduce radon emanation from phosphogypsum allowing for safer landfill disposal and/or the production of silicon fertilizer products, supplementary cementitious materials, and the recovery of available sulfur for further processing into other useful products.

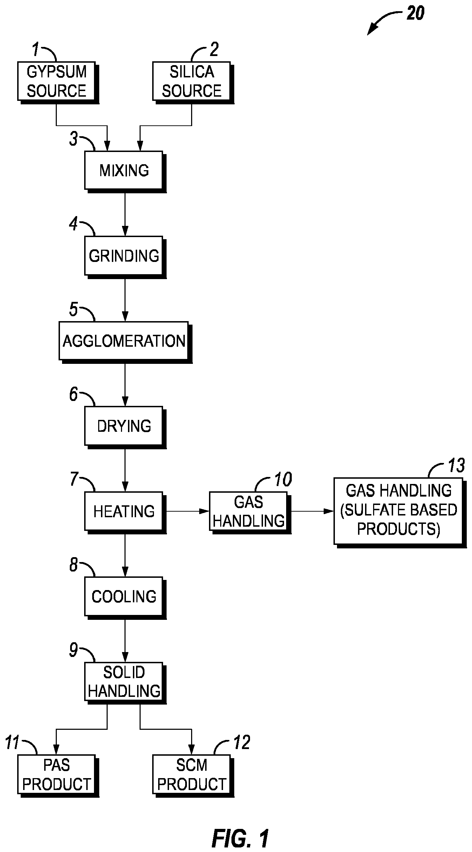

According to another method and system 20 shown in Fig. 1, raw materials, such as, a gypsum source 1 and a silicon source 2, are mixed 3 and ground 4. The raw materials are mixed 3 to the desired silica ratio before grinding 4. As the term is used herein, "silica ratio" or "SR" is defined as the formula weight ratio (also, mole ratio) of silicon (on a silicon dioxide basis) to calcium (on a calcium oxide basis) plus silicon. Mathematically, SR = (wt% SiO₂/60)/[(wt% CaO/56) + (wt% SiO₂/60)]. Consequently, the wt% of a calcium source, such as gypsum (CaSO₄), is converted to a CaO basis before calculating silica ratio. The wt% of a silicon source other than silicon dioxide is likewise converted to an SiOz basis.

Agglomeration 5 uses either a balling drum, balling pan, or briquetter to produce 3/8 - 5/8 inch (in.) diameter pellets or 1-2 in. briquettes. The agglomerates are dried 6 in a grate dryer, fluid bed dryer, grate kiln, etc. The dried agglomerates are heated 7 in a rotary kiln, rotary hearth furnace, or other heating device, such as a tunnel kiln, a straight grate known for iron ore pelletizing, etc. If the straight grate process is used, the drying, heating, and cooling steps are combined. The heat-processed agglomerates are cooled 8 and the cooled agglomerates are processed in solid handling 9 and either packaged and sold as a PAS product 11 or an SCM product 12 or both. Gases from heating 7 are collected and may be further processed in gas handling 10 into a salable or reusable form in gas handling 13, such as sulfuric acid, ammonium sulfate, or other sulfate-based products. Although not shown on the drawing, the final products may undergo further processing during cooling or granulating to add other plant nutrients (e.g., phosphorus, potassium, nitrogen, iron, etc.) to the PAS product. Waste heat from the kiln, furnace, etc. 7 may be captured and used for agglomerate drying 6.

The gypsum source 1 includes phosphogypsum, gypsum filter cake from the wet acid process that produces phosphoric acid, waste gypsum by-product from known SO₂ lime scrubber systems, ordinary gypsum, or combinations thereof. The silicon source 2 includes sand, tailing sands, or combinations thereof, and may include other silicon-containing materials. The powdered PAS 11 or SCM 12 products contain 80% minus 200 mesh material (at least 80% of particles have a size less than 74 micrometers (µm), i.e., will pass through a 200 mesh screen).

This process can use a rotary kiln, rotary hearth furnace, grate kiln, etc. as the means for providing the energy and temperature for the reaction of calcium and silicon to produce calcium silicates. Melting in these vessels is controlled in a manner that allows for the continuous removal of the processed material so that it does not remain in the vessel and result in shutdown of the process. The exhaust heat from the kiln or furnace can be used for drying moisture-containing raw material and/or agglomerate feed.

Raw material may be ground to at least 80% minus 200 mesh before it is mixed and agglomerated and then layered onto the hearth floor or fed into the kiln. The feed agglomerates for a rotary hearth furnace may be heated at a rate of 200 to 300 °C per minute, such as 250 °C per minute. The process temperature for a rotary hearth furnace may be maintained at a range of 1200 - 1350 °C for 20-30 minutes. The temperature, heating rate, and retention time in a kiln are in the same 1200 - 1350 °C range, albeit slower (100 - 200 °C per minute) and longer (30 - 60 minutes).

The interior of the furnace or kiln may be heated by indirect heaters or the direct combustion of fuel gas, natural gas or fuel oil with port air and/or oxygen enriched combustion air injected through the furnace roof and walls. Radiation is the main mode of heat transfer from the gas and furnace walls to the agglomerate bed. The secondary heat transfer mechanisms are convection from the gas and conduction from the floor and walls.

The processed material that is discharged from the kiln or furnace may be cooled. The cooled product may be used as is or subsequently ground and granulated into finished product.

Off gases may be collected to produce sulfuric acid and/or ammonium sulfate using known technology. A dust collection or scrubbing system to remove particulates for reuse and/or a carbon dioxide capture system for CO₂ generated from the combustion of natural gas may be utilized.

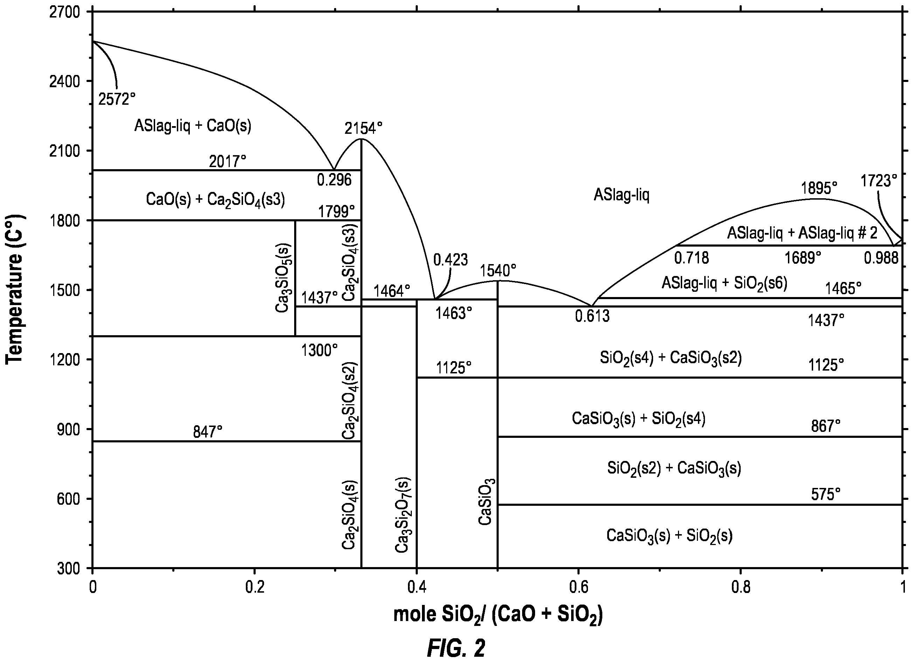

Fig. 2 is the phase diagram for CaO-SiO₂ and presents the eutectic points for the various silica ratios and process temperatures.

The most desirable silica ratio for the methods and systems herein begins at 0.64 and ends at around 0.8 for temperatures 1250 °C or higher. In some cases, even small amounts of melting and stickiness can be undesirable in a rotary kiln. A rotary hearth furnace, which has the bed stable and running under the heat source, is more tolerant of melting and a small amount of melting is acceptable in that case.

As shown herein, silica ratios of around 0.5 can be used that produce amorphous silicon without significant melting and at temperatures just above 1250 °C.

### Radiological Testing.

One may demonstrate that the calcium silicate product containing radium-226 does not become a permanent radon source that increases external gamma dose rates from its use as a supplementary cementitious material (SCM), lightweight aggregate, soil stabilizer, or plant-available silicon (PAS) fertilizer.

From a public health perspective, exposure to radon gas is the most recognized potential health consequence of most NORM-bearing products. One may determine how much radon comes out of the surface of a product. This is often measured by a "radon flux" technique that captures and measures radon released from a known surface area of material into a container of a specific volume which encloses the material for a specific time. To know what fraction of the radon contained in the calcium silicate produced from phosphogypsum is represented by the amount released, one needs the activity concentration in the calcium silicate of the radon producer, its "parent" radium-226, which provides the maximum amount of its "daughter", radon-222, that can be present. In this case, the activity concentration of the radon daughter will never exceed that of its radium parent, but they will be equal in a closed system after 7 daughter half-lives (or 3.82 days x 7 ≈ 27 days).

Radiological tests were conducted to characterize the activity concentrations of radionuclides in the produced calcium silicate and the fraction of radon gas it releases. The results of these tests are used to determine the dose potential to members of the public in proximity to the produced calcium silicate in raw form. Radiation doses to the public occur because of direct irradiation from sources external to the body, or internal doses from ingestion or inhalation. The known main contributors are the dose from inhalation of radon gas and its solid progeny radionuclides, and direct exposure to gamma radiation from sources close to the body.

The Saskatchewan Research Council (SRC) has conducted radiological analysis of the raw material inputs and calcium silicate output. The SRC analyzed the radium-226 (226Ra) activity concentration, as well as the radon-222 (222Rn) emanation in becquerels per gram (Bq/g). Of specific interest to this project, the SRC measured the radon fractional release, also often called the radon emanation fraction or emanation coefficient (E). The emanation fraction is the fraction of the radon that is produced in the radium (Ra-226) bearing grains of the material that escapes into the pore spaces of the material. It is therefore a measure of the amount of radon that could potentially be released to the air from the material and become a source of radon exposure. The results of the radioactivity analyses are shown in Table 2.

Phosphogypsum processors may demonstrate that radium-226 containing products do not become a permanent radon source that increases external gamma dose rates from their use as a supplementary cementitious material (SCM), lightweight aggregate, soil stabilizer, or plant-available silicon (PAS) fertilizer. These radiological tests show that very little radon is released from the calcium silicate and that the 222Rn activity concentration will be close to secular equilibrium. That is, 226Ra and all the progeny below it in the decay chain will have nearly equal activity concentrations.

For comparison, emanation fractions of radon from granite have been measured from 0.03 to 0.28, with a nominal value of 0.1 (or 10%) by the Health Physics Society, specialists in radiation safety ("Radiation from granite countertops", 2012). Considering a granite countertop at the higher end of this range at say 0.3 Bq/g 226Ra, only 10% or 0.03 Bq 222Rn per gram of granite will be available to the surrounding air. Under a conservative scenario of a small kitchen with a lot of granite, this is considered safe for use within homes. The radon released per gram of granite countertop is approximately ten times more than the radon released per gram of produced calcium silicate.

As additional reference points, SRC also conducted radiological testing for the other materials. The SRC radiological test results for the process inputs, process output, and other materials are included for comparison purposes and are summarized in Table 2, below, and Fig. 3. Additionally, a concrete control sample had a radon-222 emanation rate of 0.014 Bq/g.

**TABLE 2 - SRC Radiological Results**

| Material | Radium 226 | | Radon-222 emanation rate | Radon-222 fractional release (i.e., emanation coefficient, E) |
|---|---|---|---|---|
| Process Inputs and Outputs | | | | |
| Phosphogypsum | 1.4 Bq/g | 37.8 | 0.20 Bq/q | 14 % |
| Phosphatic Sand | 0.26 | 7.0 pCi/g | 0.036 Bq/g | 14% |
| Calcium Silicate | 1.1 Bq/g | 29.7 | 0.006 Bq/g | 0.54 % |

| Other Materials (for comparison) | | | | |
|---|---|---|---|---|
| Phosphatic Clay | 1.7 Bq/g | 45.9 | 0.36 Bq/g | 21 % |
| Phosphate Ore | 1.1 Bq/g | 29.7 | 0.12 Bq/g | 11 % |
| Florida Native Soil | 0.09 | 2.4 pCi/g | 0.016 Bq/g | 18 % |

US 40 CFR § 61.204 governs the distribution and use of phosphogypsum for outdoor agricultural purposes. The rule states that the average radium-226 (solid) concentration at the location in the stack from which the phosphogypsum will be removed shall not exceed 10 pCi/g. Table 2 shows that the results for phosphogypsum, phosphatic clay, phosphate ore, and the calcium silicate exceed this standard. Radium is present in these materials as a solid and the phosphogypsum radium limit is meant to ensure safe levels of radon emanation (as a gas) from the radium solids contained in phosphogypsum.

It is believed that the emanation rate for radon radiation (gas) from the calcium silicate produced from the use of phosphogypsum and phosphatic sand as raw materials is restricted on a molecular level by a "house of glass" that is created when calcium silicates are formed during the thermal decomposition of these materials. Two physical parameters (porosity and specific surface area) likely control radon emanation from the calcium silicate product. The emergence of a low permeable barrier appears to be a promising immobilization matrix for radon from phosphate ore and phosphogypsum.

As shown in Fig. 3, the radon emanation rate for calcium silicate is less than that of all the raw material inputs as well as phosphate ore, phosphatic clay, granite, and native soil.

Based on the sale and use of granite in kitchen counter tops, and the radon emanation from produced calcium silicate when compared to granite and native soils, the calcium silicate produced by this process would be safer for landfill disposal (as compared to phosphogypsum). It would also be safe for use as a plant-available silicon fertilizer, supplementary cementitious material, lightweight aggregate, and soil stabilizer. For each of these uses, exposure pathways may be restricted and the radon emanation and resulting doses may be less than that for the materials shown in Fig. 3.

Additional tests and analysis to determine the mechanism, thermal decomposition, and reformulation of uranium and radium are planned. Additional characterization of the radon emanation from the calcium silicate products will be conducted. This is to assist with USEPA approval for the use of phosphogypsum in this process.

### Other Laboratory Testing.

### Sulfur Decomposition/Evolution vs. Temperature.

Lab experiments were conducted using phosphogypsum, waste phosphatic sand, and waste phosphatic clay over a range of silica ratios and temperatures to determine sulfur decomposition yields versus temperature. Waste phosphatic clay was used as both a binder and silica source. No carbon was used as a reductant. The temperature ranged from 900 C to 1300 °C and the silica ratios ranged from 0.29 to 0.78. Each sample was held at the target temperature for 30 minutes. Samples were evaluated for any melting or sticking characteristics. Samples were ground and then analyzed using a sulfur analyzer available from LECO Corp. in St. Joseph, Michigan and an Inductively-Coupled Plasma (ICP). A ceramic castable crucible was used as a carbon crucible would influence the reactivity. A sample of pure gypsum was made and tested to get a baseline of when decomposition starts to take place. Previous published data indicates 1250 °C.

The data demonstrates that the evolution rate of sulfur is influenced by the amount of silica present. The higher the % silica, the more sulfur evolves at any given temperature. Reaction 1 above explains this. Excess SiOz can drive the reaction to make CaSiO₃ (monocalcium silicate) and the subsequent SOs gas. Silica ratios above 0.5 have excess SiOz in the mix.

Not only does the presence of SiO₂ start the decomposition of the sulfur at lower temperatures, it decreases melting at the temperatures that CaSO₄ decomposes at without SiOz. This may allow the use of different types of furnaces (kilns, hearths, straight grates) without operational issues. The presence of excess SiOz also allows producing a product that is suitable as both a PAS fertilizer and as a cement substitute.

**TABLE 3 - % Sulfur Removal vs. Temperature at 30 Minutes**

| Desc %Gyp/%Sand/%Clay | Silica Ratio | 900 °C | 1000 °C | 1100 °C | 1200 °C | 1250 °C | 1300 °C |
|---|---|---|---|---|---|---|---|
| 30/60/10 | 0.78 | 0 | 5% | 24% | 55% | 95% | 95% |
| 40/50/10 | 0.72 | 0 | 0 | 20% | 140% | 95% | 95% |
| 50/40/10 | 0.64 | 0 | 0 | 10% | 140% | 95% | 95% |
| 60/30/10 | 0.57 | 0 | 0 | < 10% | 30% | 80% | |
| 70/20/10 | 0.48 | 0 | 0 | < 10% | 20% | 80% | melted |
| 80/10/10 | 0.39 | 0 | 0 | < 10% | 20% | 65% | melted |
| 95/0/5 | 0.29 | 0 | 0 | < 10% | 20% | 50% melted | melted |

Based upon this data, the desired feed agglomerate contains 30-50% gypsum, 40-60% sand, and 10% clay at an operating temperature between 1250 - 1300 °C. The sulfur removal results for these ranges are shown in the cells with a double border. This is an equivalent SR range of 0.64 to 0.8. Phosphogypsum mixes in the range of 30-50% gypsum by weight (30/60/10 thru 50/40/10) would produce solid products that would qualify for both a cement substitute material and for plant-available silicon. The cells with a dashed border have mixes that either melt or have lower sulfur removal.

### Laboratory Analysis for Silicon Fertilizers.

Lab testing indicated that the presence of silicon in a more soluble form such as calcium silicate, rather than an insoluble crystalline form, e.g., quartz, is demonstrated by the amount of plant-available silicon present in the final product. The higher the level of plant-available silicon in the silicon fertilizer, the more desirable the material. The chemical and physical characteristics of the Fig. 1 system's products may be controlled by managing the quality and adjusting the quantity of the input streams and varying processing temperatures, as noted below.

The Fig. 1 production system is based on maintaining a certain silica ratio of various raw materials and using heat to favor producing amorphous silicon in the form of dicalcium silicate (Ca₂SiO₄) and/or tricalcium silicate (CasSiOs or Ca₃Si₂O₇) and less monocalcium silicate (CaSiO₃) and quartz (i.e., silicon dioxide) by controlling the melting of the feed materials at various operating temperatures. Available silicon can be produced from various combinations of calcium sources and silicon sources contained in tailing sand, gypsum, and phosphogypsum when used as the raw material feed to a hearth furnace, kiln, or other heating device. The silica ratio may be maintained between 0.64 to 0.80 for silicon fertilizers.

According to bench scale and pilot plant testing, the level of available silicon that is produced can be controlled by the raw material characteristics, chemistry (e.g., silica ratio), and temperature of the process. By way of example, the feed ingredients (a combination of phosphogypsum and phosphatic tailing sand) may contain a silica ratio of 0.2 to 0.8 and be heated to at least 1200 °C to produce plant-available silicon fertilizer products.

### PAS vs. Silica Ratio.

There are many variables that influence the outcomes, but generally, the production of calcium silicates as amorphous silicon (measured as PAS) has varied with the silica ratio as shown in lab and pilot scale testing of the raw materials in the feed. In the examples below, feed agglomerates were prepared according to method shown in Fig. 1 and described above to produce 3/8 - 5/8 in. diameter dried pellets or 3/4 in. briquettes. The silica ratios listed were calculated for the "green balls" based on the mass of ingredients and composition assays of the ingredients.

PAS results were obtained using a lab furnace for heating various combinations of phosphogypsum and phosphatic tailing sand (silicon source), which produced plant-available silicon at both higher and lower silica ratios at a temperature of 1200 °C held for 30 minutes, as shown in Table 4.

**TABLE 4**

| Phosphogypsum and Tailing Sand | |
|---|---|
| Silica Ratio | PAS |
| 0.42 | 6.1% |
| 0.74 | 4.9% |

This is a positive outcome as the higher silica ratio mixes still produce an acceptable PAS product as well as qualify as a cement substitute. As discussed earlier, silica ratios in the 0.64 to 0.8 range are not expected to melt at the desired temperatures whereas the mix that had a 0.42 silica ratio did not melt either.

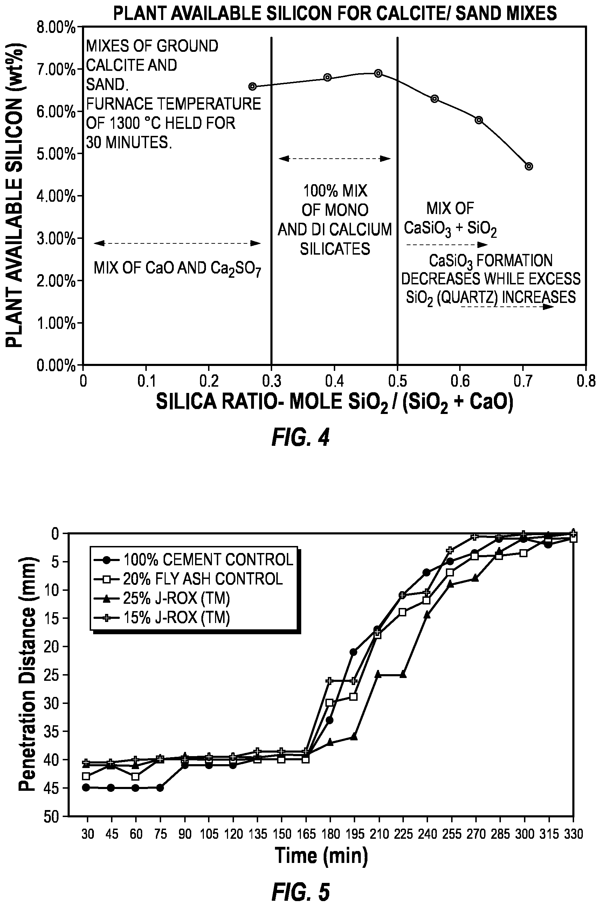

Fig. 4 paints a clearer picture of what influences the amount of PAS vs. mole ratio (SiO₂/(SiO₂+CaO). Calcite (CaCO₃) was used in this example as a substitute for gypsum as the calcium source for illustration of the impact of the (SiO₂/(SiO₂+CaO) mole ratio. It is clear that once 0.5 is reached and one continues to move to the right and starts producing less calcium silicates, that the amount of PAS decreases. When at 0.5 and less, and making 100% calcium silicates, the PAS peaks and levels out and may even start to decrease.

### Level of PAS in Raw Materials.

As a baseline, the following silicon-containing materials were analyzed for PAS. The results indicate that these materials contain minor amounts of PAS as noted in Table 5. None of these materials are useful alone as a silicon fertilizer.

**TABLE 5 - Background PAS Content**

| | PAS wt% |
|---|---|
| Reject phosphate ore | 0.11% |
| Phosphatic tailing sand | 0.16% |
| Phosphatic clay tailing | 0.24% |

### Cement Substitute Testing.

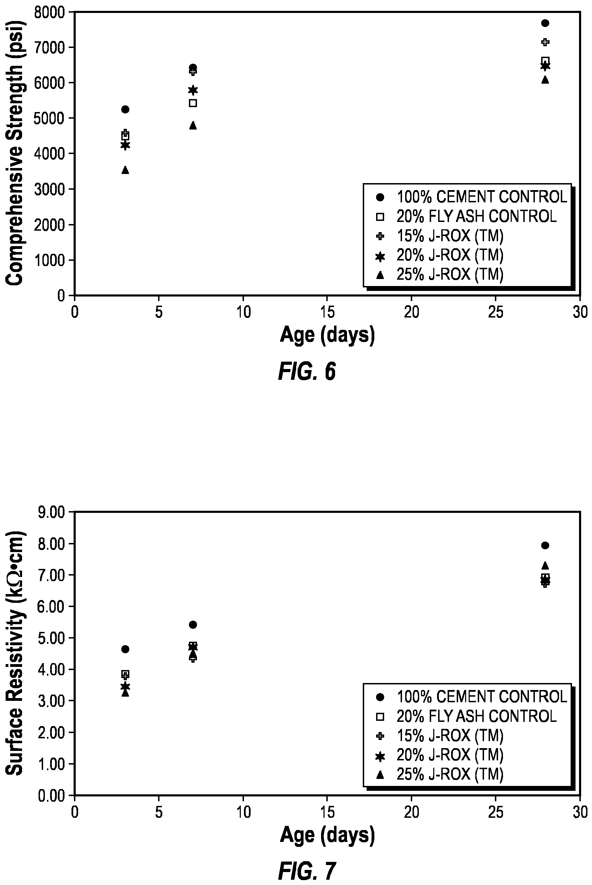

As shown in Table 6 and Figs. 5-7, all data to date (using a silica ratio of 0.7 and reject phosphate ore as a substitute for gypsum) qualify the calcium silicate processed agglomerate product (referred to in Figs. 5-7 as J-ROX(TM)) as a high-quality SCM, with improved setting time, compressive strength, and durability characteristics, which are comparable to or better than cement or fly ash (partial replacement of cement) in concrete mixes. The cement characteristics of calcium silicates produced from either the processing of reject phosphate ore or phosphogypsum are presumed to be identical. Nevertheless, these tests will be repeated with phosphogypsum in lieu of reject phosphate ore.

**TABLE 6 - Calcium Silicate Set Time Test Results**

| Sample | Initial set time (min) | Final set time (min) |
|---|---|---|
| 100% Cement control | 194 | 364 |
| 20% Fly ash control | 206 | 351 |
| 15% J- ROX(TM) | 201 | 304 |
| 25% J- ROX(TM) | 222 | 346 |

### Pilot Scale Testing.

Pilot scale tests were conducted using a 5-meter rotary hearth furnace (RHF) heated with natural gas. As will be appreciated from the description below, the pilot scale tests confirmed the validity of the laboratory testing as far as mixes (silica ratio), temperatures, times, and sulfur removal listed in Table 3 above. Although the text herein does not describe the furnace with great detail, the function of the components may be understood from a similar RHF described in U.S. Patent Application No. 16/914,182 (filed June 26, 2020), listed above as incorporated by reference, combined with the knowledge of persons having ordinary skill in the art.

The feed to the furnace contained a mixture of ground (at least 80% minus 200 mesh) ordinary gypsum (45 wt%), phosphatic sand (52 wt%), and bentonite (3 wt%) used to make small briquettes with a silica ratio of 0.72. The gypsum for this test showed essentially no phosphorus at 0.0 wt%. Phosphatic sand often contains 6.6 wt% P₂O₅. For this test, the feed briquettes contained 3.5% P₂O₅. Bentonite helped with making briquettes for this test, but might be reduced in quantity or eliminated as briquetting skill increases, such as during commercial operation. Phosphatic clay might be substituted for the bentonite. The briquettes weighed approximately 3 grams each and measured approximately 0.75 inch long x 0.5 inch wide x 3/8 inch thick.

Approximately 700 pounds of briquettes were fed to the furnace for 150 minutes. The furnace operated at an estimated bed temperature of 1275° C for a 30-minute hot zone retention time to get the desired sulfur decomposition. The "hot zone" is where exposure to temperatures sufficient for reaction occurs. This temperature is based upon the readings from a series of thermocouples that were used to measure the temperature of the atmosphere in the reaction chamber at six (6) locations in the furnace hot zone. The average temperatures of all six thermocouples ranged between 1281 ° C and 1307°C. There was no noticeable melting of the briquettes during the run and, consequently, melting did not hamper operations. Total natural gas usage during the run was 3300 standard cubic feet. The processed briquettes contained 3.9 wt% P₂O₅, a percentage increase due to a loss in mass, indicating no substantial carbothermal reduction of phosphorus.

Based upon the difference in the level of sulfur measured in the furnace feed and furnace discharge, sulfur decomposition of the furnace feed averaged 86% with a maximum of 93% during the run as shown in Fig. 8. This allowed for the liberation of sulfur gases in the furnace exhaust which was available for subsequent recovery as sulfuric acid and other sulfur-containing compounds, including ammonium sulfate.

Although minima and maxima are listed for the above described ranges and other ranges designated herein, it should be understood that more narrow included ranges may also be desirable and may be distinguishable from prior art. Also, processing principles discussed herein may provide an additional basis for the lesser included ranges.

In compliance with the statute, the embodiments have been described in language more or less specific as to structural and methodical features. It is to be understood, however, that the embodiments are not limited to the specific features shown and described. The embodiments are, therefore, claimed in any of their forms or modifications within the proper scope of the appended claims appropriately interpreted in accordance with the doctrine of equivalents.

The invention may further be described by the following clauses:
1. A method comprising:
   forming a reaction bed containing feed agglomerates in a reaction chamber by heating the feed agglomerates, individual feed agglomerates initially containing particles of a gypsum source and of a silicon source approximately homogeneously distributed throughout the individual agglomerates;
   reacting the gypsum and silicon in the feed agglomerates during the heating in the reaction chamber and, thereby, forming processed agglomerates that contain silicates of calcium and an increased amount of amorphous silicon compared to the feed agglomerates before the heating;
   generating off gas from the reaction bed, the off gas containing oxides of sulfur; and
   removing the processed agglomerates from the reaction chamber.
2. The method of clause 1, wherein the gypsum source is phosphogypsum.
3. The method of clause 2, wherein the feed agglomerates exhibit a radon-222 emanation rate due to the phosphogypsum and the method further comprises decreasing the radon-222 emanation rate in the processed agglomerates compared to the feed agglomerates before the heating.
4. The method of clause 3, wherein the radon-222 emanation rate of the processed agglomerates after cooling to ambient temperature is less than or equal to 0.013 becquerels/gram (Bq/g).
5. The method of clause 1, wherein the feed agglomerates initially lack components sufficient to conduct carbothermal reduction during the heating of the feed agglomerates.
6. The method of clause 1, wherein individual agglomerates initially provide a silica ratio ranging from 0.2 to 0.8 defined as a formula weight ratio of silicon dioxide to calcium oxide plus silicon dioxide.
7. The method of clause 6, wherein the silica ratio ranges from 0.5 to 0.8.
8. The method of clause 6, further comprising maintaining a temperature in the reaction chamber from 1200 to 1400 °C along at least a portion of the reaction bed.
9. The method of clause 8, wherein the feed agglomerates are maintained at the temperature for a time of 20 minutes or more.
10. The method of clause 1, further comprising maintaining a temperature in the reaction chamber from 1250 to 1300 °C along at least a portion of the reaction bed for a time of 30 minutes or more.
11. The method of clause 1, wherein the feed agglomerates initially lack a catalytic additive that would increase the reactivity of the gypsum with the silicon.
12. The method of clause 1, wherein the method further comprises recovering sulfur from the off gas.
13. The method of clause 1, wherein the heating of the feed agglomerates occurs in an oxidizing atmosphere.
14. The method of clause 1, wherein the silicon source is silica.
15. The method of clause 1, wherein the reaction chamber is comprised by a rotary kiln, a rotary hearth furnace, a tunnel kiln, or a straight grate known for iron ore pelletizing.
16. The method of clause 1, wherein:
   the feed agglomerates initially lack components sufficient to conduct carbothermal reduction during the heating of the feed agglomerates;
   individual agglomerates initially provide a silica ratio ranging from 0.2 to 0.8 defined as a formula weight ratio of silicon dioxide to calcium oxide plus silicon dioxide;
   the method further comprises maintaining a temperature in the reaction chamber from 1200 to 1400 °C along at least a portion of the reaction bed;
   the feed agglomerates are maintained at the temperature for a time of 20 minutes or more; and
   the feed agglomerates initially lack a catalytic additive that would increase the reactivity of the gypsum with the silicon.
17. The method of clause 16, wherein the gypsum source is phosphogypsum and the silicon source is silica.
18. The method of clause 1, wherein:
   the gypsum source is phosphogypsum;
   the feed agglomerates exhibit a radon-222 emanation rate due to the phosphogypsum and the method further comprises decreasing the radon-222 emanation rate in the processed agglomerates compared to the feed agglomerates before the heating;
   individual agglomerates initially provide a silica ratio ranging from 0.2 to 0.8 defined as a formula weight ratio of silicon dioxide to calcium oxide plus silicon dioxide;
   the method further comprises maintaining a temperature in the reaction chamber from 1200 to 1400 °C along at least a portion of the reaction bed;
   the feed agglomerates are maintained at the temperature for a time of 20 minutes or more; and
   the silicon source is silica.
19. The method of any one of clauses 1, 16, or 18, wherein the temperature is from 1250 to 1300 °C and the silica ratio ranges from 0.5 to 0.8.
20. The method of any one of clauses 1, 16, or 18, wherein the processed agglomerates exhibit pozzolanic properties suitable for supplementary cementitious material at least when ground to a particle size distribution in which at least 80% of the particles have a particle size less than 74 µm (200 mesh).
21. The method of any one of clauses 1, 16, or 18, wherein the processed agglomerates exhibit a plant-available silicon content of 2.3 wt% or greater.

## Claims

1. A method comprising:
(a) forming a reaction bed containing feed agglomerates in a reaction chamber by:
heating the feed agglomerates,
maintaining a temperature in the reaction chamber from 1200 to 1400 °C along at least a portion of the reaction bed, and
maintaining the feed agglomerates at the temperature for a time of 20-60 minutes,
individual feed agglomerates initially containing particles of a gypsum source and of a silicon source approximately homogeneously distributed throughout the individual agglomerates;
(b) reacting the gypsum and silicon in the feed agglomerates during the heating in the reaction chamber and, thereby, forming processed agglomerates that contain silicates of calcium and an increased amount of amorphous silicon compared to the feed agglomerates before the heating;
(c) generating off gas from the reaction bed, the off gas containing oxides of sulfur; and
(d) removing the processed agglomerates from the reaction chamber.

2. A method comprising:
(a) forming a reaction bed containing feed agglomerates in a reaction chamber by heating the feed agglomerates, individual feed agglomerates initially containing particles of a gypsum source containing CaSO₄ and of a silicon source containing SiO₂ approximately homogeneously distributed throughout the individual agglomerates, wherein the feed agglomerates initially lack a catalytic additive that would increase the reactivity of the gypsum with the silicon;
(b) as the sole essential reactants, reacting the CaSO₄ and SiO₂ in the feed agglomerates during the heating in the reaction chamber and, thereby, forming processed agglomerates that contain silicates of calcium and an increased amount of amorphous silicon compared to the feed agglomerates before the heating;
(c) generating off gas from the reaction bed, the off gas containing oxides of sulfur; and
(d) removing the processed agglomerates from the reaction chamber.

3. The method of claim 1 or claim 2, wherein the gypsum source is phosphogypsum; optionally
wherein the feed agglomerates exhibit a radon-222 emanation rate due to the phosphogypsum and the method further comprises decreasing the radon-222 emanation rate in the processed agglomerates compared to the feed agglomerates before the heating, optionally
wherein the radon-222 emanation rate of the processed agglomerates after cooling to ambient temperature is less than or equal to 0.013 becquerels/gram (Bq/g).

4. The method of claim 1 or claim 2, wherein the feed agglomerates initially lack components sufficient to conduct carbothermal reduction during the heating of the feed agglomerates.

5. The method of claim 1 or claim 2, wherein individual agglomerates initially provide a silica ratio ranging from 0.2 to 0.8 defined as a formula weight ratio of silicon dioxide to calcium oxide plus silicon dioxide, wherein the weight% of a calcium source other than calcium oxide is converted to a CaO basis and the weight% of a silicon source other than silicon dioxide is converted to an SiO₂ basis before calculating the silica ratio; optionally
wherein the silica ratio ranges from above 0.5 up to 0.8, which represents excess silica.

6. The method of claim 5 as it depends on claim 2, further comprising maintaining a temperature in the reaction chamber from 1200 to 1400 °C along at least a portion of the reaction bed, optionally
wherein the feed agglomerates are maintained at the temperature for a time of 20 minutes or more.

7. The method of claim 1 or claim 2, further comprising maintaining a temperature in the reaction chamber from 1250 to 1300 °C along at least a portion of the reaction bed, wherein in a method according to claim 1 the feed agglomerates are maintained at the temperature for a time of 30-60 minutes, or in a method according to claim 2 the feed agglomerates are maintained at the temperature for a time of 30 minutes or more.

8. The method of claim 1, wherein the feed agglomerates initially lack a catalytic additive that would increase the reactivity of the gypsum with the silicon.

9. The method of claim 1 or claim 2, wherein the method further comprises recovering sulfur from the off gas.

10. The method of claim 1 or claim 2, wherein the heating of the feed agglomerates occurs in an oxidizing atmosphere.

11. The method of claim 1, wherein the silicon source is silica.

12. The method of claim 1 or claim 2, wherein:
the feed agglomerates initially lack components sufficient to conduct carbothermal reduction during the heating of the feed agglomerates;
individual agglomerates initially provide a silica ratio ranging from 0.2 to 0.8 defined as a formula weight ratio of silicon dioxide to calcium oxide plus silicon dioxide, wherein the weight% of a calcium source other than calcium oxide is converted to a CaO basis and the weight% of a silicon source other than silicon dioxide is converted to an SiO₂ basis before calculating the silica ratio;
regarding the method of claim 2, the method further comprises maintaining a temperature in the reaction chamber from 1200 to 1400 °C along at least a portion of the reaction bed;
regarding the method of claim 2, the feed agglomerates are maintained at the temperature for a time of 20 minutes or more; and
the feed agglomerates initially lack a catalytic additive that would increase the reactivity of the gypsum with the silicon.

13. The method of claim 12, wherein the gypsum source is phosphogypsum and the silicon source is silica.

14. The method of claim 1 or claim 2, wherein:
the gypsum source is phosphogypsum;
the feed agglomerates exhibit a radon-222 emanation rate due to the phosphogypsum and the method further comprises decreasing the radon-222 emanation rate in the processed agglomerates compared to the feed agglomerates before the heating;
individual agglomerates initially provide a silica ratio ranging from 0.2 to 0.8 defined as a formula weight ratio of silicon dioxide to calcium oxide plus silicon dioxide, wherein the weight% of a calcium source other than calcium oxide is converted to a CaO basis and the weight% of a silicon source other than silicon dioxide is converted to an SiO₂ basis before calculating the silica ratio;
regarding the method of claim 2, the method further comprises maintaining a temperature in the reaction chamber from 1200 to 1400 °C along at least a portion of the reaction bed;
regarding the method of claim 2, the feed agglomerates are maintained at the temperature for a time of 20 minutes or more; and
the silicon source is silica.

15. The method of any one of claims 1, 12, or 14, wherein the temperature is from 1250 to 1300 °C and the silica ratio ranges from above 0.5 up to 0.8, which represents excess silica.
